(19) Europäisches Patentamt
European Patent Office
Office européen des brevets

(11) Veröffentlichungsnummer: **0 025 139**
**B1**

(12) **EUROPÄISCHE PATENTSCHRIFT**

(45) Veröffentlichungstag der Patentschrift: **02.03.83**

(51) Int. Cl.³: **C 08 J 3/02,** B 01 F 17/00, C 08 L 63/00 // C09D3/58

(21) Anmeldenummer: **80104885.1**

(22) Anmeldetag: **16.08.80**

(54) **Wässrige Dispersionen von Epoxidverbindungen.**

(30) Priorität: **29.08.79 DE 2934951**

(43) Veröffentlichungstag der Anmeldung: **18.03.81 Patentblatt 81/11**

(45) Bekanntmachung des Hinweises auf die Patenterteilung: **02.03.83 Patentblatt 83/9**

(84) Benannte Vertragsstaaten: **BE DE FR NL**

(56) Entgegenhaltungen:
**DE-A-2 037 523**
**DE-A-2 606 284**
**US-A-3 983 056**

(73) Patentinhaber: **BAYER AG, Zentralbereich Patente, Marken und Lizenzen, D-5090 Leverkusen 1, Bayerwerk (DE)**

(72) Erfinder: **Zabrocki, Karl, Dr., Edelfalter 33, D-4046 Büttgen (DE)**
Erfinder: **Schulze, Hans, Dr., Wolfskaul 4, D-5000 Köln 80 (DE)**
Erfinder: **Weider, Franz, Dr., Jakob-Fröhlen-Strasse 36, D-5090 Leverkusen 3 (DE)**
Erfinder: **Wellner, Wolfgang, Dr., Hahnenweg 8, D-5000 Köln 80 (DE)**
Erfinder: **Schartau, Wolfgang, Dr., Zum Hahnenberg 20, D-5068 Odenthal (DE)**

**Die Akte enthält technische Angaben, die nach dem Eingang der Anmeldung eingereicht wurden und die nicht in dieser Patentschrift enthalten sind.**

**EP 0 025 139 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Wäßrige Dispersionen von Epoxidverbindungen

Die vorliegende Erfindung betrifft wäßrige Dispersionen von 1,2-Epoxidverbindungen, die insbesondere für den Beschichtungsbereich eingesetzt werden.

Unter »wäßrigen Dispersionen« werden im folgenden heterogene Systeme verstanden, bei denen die Harzphase in der kontinuierlichen Wasserphase in Form von Teilchen mit Durchmessern von 0,05 bis 10 μm verteilt ist.

Ein wichtiger Vorteil, den derartige wäßrige Dispersionen gegenüber der konventionellen Form einer Lösung des Harzes in organischem Lösemittel haben, besteht darin, daß das organische Lösungsmittel vorzugsweise völlig vermieden werden kann. Lösemittel sind gewöhnlich giftig und entzündlich; sie stellen daher bei Herstellung, Lagerung, Transport und Verpackung von Epoxidharzsystemen Gefahrenquellen dar und führen zur Umweltverschmutzung.

Es hat daher bereits Versuche gegeben, einen Teil des bei konventionellem Vorgehen verwendeten Lösemittels durch Wasser zu ersetzen. Ein derartiges Vorgehen ist in der DE-OS 2 606 284 beschrieben, in der lösungsmittelhaltige, wäßrige Epoxidharzdispersionen vorgestellt werden. Mit diesen Systemen ist jedoch nur ein Zwischenziel auf dem Weg zu den gewünschten lösungsmittelfreien Systemen erreicht.

Eine weitere Art von Epoxidharzdispersionen ist beispielsweise in der US-PS 3 983 056 und der DE-OS 2 213 051 beschrieben. Man kann hierbei auf Lösemittel völlig verzichten, muß aber zum Erhalt stabiler Epoxidharzdispersionen einen Härter, z. B. ein Polyamin zusetzen. Diesem Härter kommt offenbar noch die Aufgabe zu, die Emulsionsbildung zu fördern. Ihrer chemischen Natur nach sind aber Härter enthaltende Systeme nicht stabil, da sie bei Lagerung – insbesondere bei höheren Temperaturen, wie sie in der Sonne ausgesetzten ungekühlten Lagerbehältern vorkommen – vorzeitig die Vernetzung beginnen.

Läßt man aber bei diesen Systemen den Härter weg, so erhält man instabile Dispersionen (siehe Vergleichsversuche a und b).

Aufgabe der vorliegenden Erfindung war die Herstellung stabiler wäßriger Dispersionen von 1,2-Epoxidverbindungen. Überraschend konnte diese Aufgabe durch Verwendung eines bestimmten Emulgiersystems gelöst werden.

Gegenstand der vorliegenden Erfindung sind wäßrige Dispersionen von 1,2-Epoxidverbindungen, bestehend aus Wasser, einer oder mehreren wasserunlöslichen 1,2-Epoxidverbindungen mit Molgewichten $\overline{M}$ zwischen 150 und 3000, vorzugsweise 200 und 2000 und einem Emulgiersystem, dadurch gekennzeichnet, daß das Emulgiersystem besteht aus

A) 9,5–35 Gew.-%, vorzugsweise 10–30 Gew.-%, mindestens eines Carboxylgruppen enthaltenden Polyesterharzes mit Säurezahlen von 10–50 mg KOH/g Substanz und Molgewichten $\overline{M}n$ von 400–4000, mindestens 30% der Carboxylgruppen sind neutralisiert;

B) 0,5–25 Gew.-%, vorzugsweise 5–15 Gew.-%, mindestens eines Emulgators mit einem HLB-Wert ≥15 und der Struktur

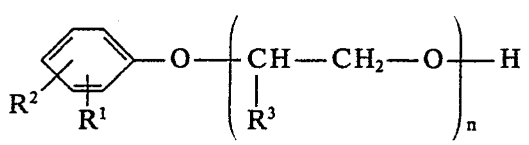

worin

$R^1$ einen $C_1$–$C_{16}$-Alkylrest, vorzugsweise einen $C_6$–$C_{16}$-Alkylrest,
$R^2$ H oder einen $C_1$–$C_{16}$-Alkylrest, vorzugsweise H,
$R^3$ H oder Methyl,
n eine Zahl von 10–50, vorzugsweise 15–30, bedeuten;

C) 40–90 Gew.-%, vorzugsweise 55–85 Gew.-%, mindestens eines Emulgators mit einem HLB-Wert ≥15 und der allgemeinen Struktur

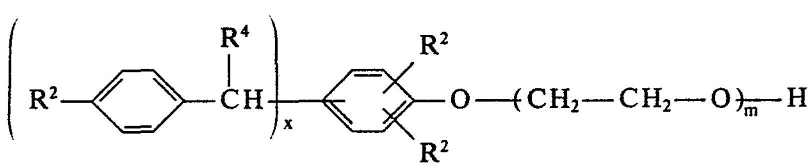

wobei

$R^2$ jeweils die obengenannte Bedeutung hat,

$R^4$ $C_1$—$C_4$-Alkyl bedeutet,
x eine Zahl zwischen 2,0 und 3,0 und
m eine Zahl von 15—100, vorzugsweise von 25—70 ist, die Summe der Prozentgehalte aus A, B und C ist 100%.

Die erfindungsgemäßen Systeme zeichnen sich überraschenderweise durch eine hohe Stabilität, eine gute Lagerfähigkeit sowie eine ausgezeichnete Verarbeitbarkeit aus.

Mit dem erfindungsgemäßen Emulgiersystem kann man alle mono- und mehrfunktionellen, praktisch nicht wasserlöslichen 1,2-Epoxidverbindungen im Molgewichtsbereich $\overline{M}n$ zwischen 150 und 3000, einzeln oder als Gemische dispergieren. Von großem technischem Interesse ist die Dispergierung mehrfunktioneller 1,2-Epoxidverbindungen, die durch geeignete bekannte Härtungskomponenten in vernetzte Materialien, z. B. Überzüge, überführt werden können.

Beispiele geeigneter wasserunlöslicher 1,2-Epoxidverbindungen sind

a) Mono- und Polyglycidylether von ein- und mehrwertigen Phenolen, insbesondere monomerer Diglycidylether des Bisphenol A sowie dessen höhere Kondensationsprodukte, die in bekannter Weise, z. B. aus Bisphenol A und Epichlorhydrin hergestellt werden; halogenierte und alkylierte Diglycidylether des Bisphenol A, z. B. von Tetrabrombisphenol A oder Tetramethylbisphenol A sowie höhermolekulare Kondensationsprodukte dieser Diglycidylether.
b) Polyglycidyleter von Novolaken, d. h. von Umsetzungsprodukten von ein- oder mehrwertigen Phenolen mit Aldehyden, insbesondere Formaldehyd, in Gegenwart saurer Katalysatoren, insbesondere von Novolaken des Phenols und der Kresole.
c) Cycloaliphatische 1,2-Polyepoxide, erhalten durch Epoxidierung von cyclischen Diolefinen mit Persäuren, etwa des Typs

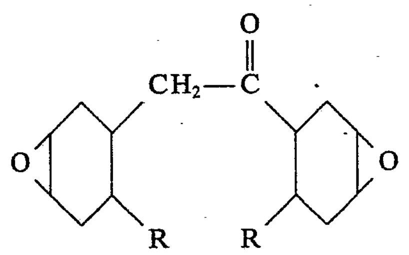

R=H, $CH_3$

wie sie in Houben—Weyl, Methoden der Organischen Chemie, 1963, Bd. 14/1, S. 486 und der dort angegebenen Literatur angegeben sind.
d) Glycidylester von cycloaliphatischen oder aromatischen Dicarbonsäuren, z. B. Hexahydrophthalsäurediglycidylester, Phthalsäurediglycidylester.
e) Glycidester von verzweigten, $C_9$—$C_{11}$-Monocarbonsäuren.

Besonders bevorzugt sind Diglycidylether des Bisphenol A und seiner höhermolekularen Kondensationsprodukte mit Epoxidäquivalenten von 170 bis ca. 1000.

Weitere Beispiele geeigneter Epoxidverbindungen finden sich in »Handbook of Epoxi Resins« von Lee und Neville, Mc. Grew-Hill Inc. (1967) und in Methoden der Organischen Chemie, Houben—Weyl 1963, Bd. 14/1, S. 462—499.

Als Komponente A des Emulgiersystems verwendet man mindestens einen Carboxylgruppen enthaltenden Polyester mit einer Säurezahl von 10—50 mg KOH/g Substanz, vorzugsweise 15—35 mg KOH/g Substanz, wobei die Carboxylgruppen ganz oder teilweise (zu mindestens 30%) neutralisiert sind.

Unter Polyestern versteht man durch Polykondensation nach bekannten Verfahren aus Alkoholen und Carbonsäuren hergestellten Polykondensate der Art, wie sie z. B. in Römpp's Chemielexikon, Bd. 1, S. 202, Frankh'sche Verlagsbuchhandlung, Stuttgart, 1966, definiert oder bei D. H. Solomon, The Chemistry of Organic Filmformers, S. 75 bis 101, John Wiley & Sons Inc. New York, 1967, beschrieben sind.

Für die Synthese der Polyester A bevorzugte Alkohole sind aliphatische, cycloaliphatische und/oder aromatische Alkohole mit 1 bis 6, vorzugsweise 2 bis 4, an nicht-aromatische C-Atome gebundenen OH-Gruppen und 1 bis 24 C-Atomen pro Molekül, z. B. Glykole wie Ethylenglykol, Propylenglykol, Butandiole, Neopentylglykol, Trimethylpentandiol-1.3, Hexandiole; Etheralkohole wie Di-, Tri- und Polyethylenglykole; oxethylierte Bisphenole mit 2 Alkylenoxidestern pro Molekul; perhydrierte Bisphenole; ferner Trimethylolethan, Trimethylolpropan, Trimethylolhexan, Glycerin, Pentaerythrit, Dipentaerythrit, Dimethylolcyclohexan, Mannit und Sorbit; einwertige, kettenabbrechende Alkohole wie Methanol, Propanol, Butanol, Cyclohexanol, 2-Ethyl-hexanol und Benzylalkohol.

Besonders bevorzugte Alkohole sind Neopentylglykol, Trimethylolpropan, Dimethylolcyclohexan und Perhydrobisphenol sowie Polyetheralkohole.

Die Polyester A können bis zu 15 Gew.-%, bezogen auf den Polyester A, einwertiger Alkoholreste, ein-

kondensiert enthalten.

Für die Synthese der Polyester A bevorzugte Säurekomponenten sind aliphatische, cycloaliphatische, gesättigte oder ungesättigte und/oder aromatiche mehrbasische Carbonsäuren bzw. deren Anhydride, vorzugsweise Di- und Tricarbonsäuren, mit 4 bis 12 C-Atomen pro Molekül oder deren veresterungsfähige Derivate (z. B. Anhydride oder Ester), z. B. Phthalsäureanhydrid, Isophthalsäure, Terephthalsäure, Tetrahydro- und Hexahydrophthalsäureanhydrid, Trimellitsäureanhydrid, Pyromellitsäureanhydrid, Maleinsäureanhydrid, Fumarsäure, Adipinsäure, Glutarsäure und Bernsteinsäureanhydrid, Azelainsäure, Endomethylentetrahydrophthalsäure, ferner halogenierte Säuren, wie Chlorphthalsäure und Hexachlor-endomethylentetrahydrophthalsäure.

Besonders bevorzugte Säurekomponenten sind Phthalsäure, Isophthalsäure, Tetrahydro- und Hexahydrophthalsäure, Adipinsäure bzw. deren Anhydride.

Die Polyester A können allein aus Polycarbonsäuren und Polyalkoholen aufgebaut werden. Es ist aber auch möglich, sie durch Einkondensation von Monocarbonsäuren zu modifizieren.

Für die Herstellung der Polyester A geeignete Monocarbonsäuren sind aliphatische, cycloaliphatische, gesättigte und ungesättigte und/oder aromatische Monocarbonsäuren mit 6 bis 35 C-Atomen pro Molekül wie Benzoesäure, Butylbenzoesäure, Toluylsäure, Hexahydrobenzoesäure, Abietinsäure, Milchsäure sowie Fettsäuren, deren Mischungen und Ester derselben wie Leinöl, Sojaöl, Holzöl, Saffloröl, Ricinusöl, Baumwollsaatöl, Erdnußöl, Tallölfettsäure, Leinölfettsäure, Sojaöl-, Holzöl-, Saffloröl- und Ricinenfettsäure und aus natürlichen, ungesättigten Ölen oder Fettsäuren durch Konjugierung oder Isomerisierung gewonnene Produkte; bevorzugte besättigte Fettsäuren sind beispielsweise Cocosfettsäuren, $\alpha$-Ethylhexansäure, Isononansäure und lineare $C_{16}$—$C_{18}$-Monocarbonsäuren.

Die Molgewichte $\overline{M}n$ der Polyester A liegen in der Regel zwischen 400 und 4000 (dampfdruckosmometrisch in Aceton bestimmt).

Die Auswahl von Art und Menge der einzelnen zum Polyester A zu kondensierenden Rohstoffe richtet sich nach dem gewünschten Molekulargewicht. Die Zusammenhänge zwischen Molekulargewicht und Rohstoffmenge sind bei U. Holfort, Farbe und Lack 68 (1962), S. 513 bis 517, S. 598 bis 607 eingehend beschrieben.

Die Herstellung der Polyester A nach bekannten Verfahren (vgl. Methoden der Organischen Chemie (Houben—Weyl), Georg Thieme Verlag Stuttgart, 1963, Bd. 14/2, S. 1 bis 5, 21 bis 23, 40 bis 44, oder C. R. Martens, Alkyd Resins, Reinhold Plastics Appl. Series, Reinhold Publ. Comp. 1961, S. 51 bis 59) erfolgen, wobei Alkohole, Carbonsäuren bzw. ihre Derivate und gegebenenfalls Öle durch Schmelz- oder Azeotropveresterung, bevorzugt in einer Inertatmosphäre, bei Temperaturen von 140 bis 260°C umgesetzt werden. Die Reaktion kann dabei z. B. durch Messung der Säurezahl und der Viskosität verfolgt werden.

Die Polykondensation kann in einer oder in mehreren Stufen erfolgen, wobei in bekannter Weise die Verkochung eines Öles oder die Nachsäuerung mittels Dicarbonsäureanhydrid zum Polyhalbester jeweils als getrennte Stufe durchgeführt werden kann.

Als Polyester A, die zu besonders glatten Dispersionen führen, haben sich polyethermodifizierte Polyester erwiesen. Diese können hergestellt werden, indem man direkt Polyalkylenoxidketten bei der Veresterung mitverwendet. Derartige Substanzen werden im folgenden auch als Emulgatorharze A bezeichnet.

Bevorzugte Polyester A, im folgenden Emulgatorharze A genannt, bestehen aus einem gegebenenfalls ölmodifizierten Polyesterteil (hydrophob) und einem gegebenenfalls durch Alkoxygruppen mit 1 bis 4 C-Atomen terminierten, Polyalkylenoxidteil (hydrophil) mit 6 bis 100, vorzugsweise 10 bis 70 Alkylenoxidresten pro Polyalkylenoxidkette, wobei der Polyalkylenoxidteil aus mehreren einzelnen Polyalkylenoxidketten besteht und die Alkylengruppe 2 bis 4, vorzugsweise 2 C-Atome enthält.

Die Emulgatorharze A können 0,1 bis 10 Gew.-%, bezogen auf Emulgatorharz A, Urethangruppen enthalten. Nach einer bevorzugten Ausführungsform werden die einseitig blockierten (z. B. veretherten) Polyalkylenoxide mit etwa äquimolaren Mengen Diisocyanat umgesetzt, so daß Polyalkylenoxide entstehen, die pro Moleküle eine freie Isocyanatgruppe tragen, welche dann ihrerseits zur Anknüpfung an den Polyesterteil des Emulgatorharzes A dienen kann.

Das mittlere Molekulargewicht der für die Herstellung der Emulgatorharze A bevorzugten Polyester kann 400 bis 4000 betragen (dampfdruckosmometrisch in Aceton bestimmt).

Die verwendeten Polyalkylenoxide können Homopolyether, aber auch Copolyether in Block- oder statitischer Verteilung sein; Homopolyethylenoxide sind besonders bevorzugte Ausgangsmaterialien für die Herstellung der Emulgatorharze A.

Als Verknüpfer zwischen Polyester- und Polyalkylenoxidteil kommen im Prinzip sämtliche Diisocyanate in Betracht.

Besonders bevorzugt werden in der Regel die technisch leicht zugänglichen Polyisocyanate, z. B. das 2,4- und 2,6-Toluylen-diisocyanat sowie beliebige Gemische dieser Isomeren (»TDI«), 1,6-Hexamethylendiisocyanat, Perhydro-2,4'- und/oder -4,4'-diphenylmethan-diisocyanat und 1-Isocyanato-3,3,5-trimethyl-5-isocyanatomethylcyclohexan.

Der Polyester A und das Emulgatorharz A enthalten im nicht-neutralisierten Zustand Carboxylgruppen entsprechend einer Säurezahl von 10 bis 50, vorzugsweise 15 bis 35. Die Carboxylgruppen des Polyesters bzw. des Emulgatorharzes können bereits vor der Vereinigung mit der wäßrigen Phase teilweise oder ganz neutralisiert werden. Bevorzugte Neutralisationsmittel sind Alkalimetallhydroxide, Ammoniak, primäre, sekundäre und tertiäre Amine, wie z. B. Ethylamin, Di- und Triethylamin, Mono-, Di- und Triethanolamin, Dimethylethanolamin, Methyldiethanolamin, Dimethylaminomethylpropanol. Die Neutralisation kann aber auch bei Zugabe in die wäßrige Phase erfolgen.

Verfahren zur Herstellung der bevorzugten Emulgatorharze A sind bekannt; vgl. DE-OS 2 528 212, 2 556 621.

Zu besonders glatten Dispersionen führen Emulgatorharze A, die man dadurch herstellt, daß man einen Polyester mit Ölgehalten von 0—30 Gew.-% mit einer Säurezahl von $\geq$5 und einer Hydroxyzahl von 50—250 als hydrophoben Teil herstellt, diesen mit den bereits erwähnten hydrophilen Isocyanatkomponenten bis zum völligen Umsatz der NCO-Gruppen abreagieren läßt, anschließend mit einem Dicarbonsäureanhydrid auf Säurezahlen von 15—35 aufsäuert und entweder durch direkte Zugabe eines Amins in die Harzschmelze oder durch Zugabe der Harzschmelze in die Amin und gegebenenfalls Komponente B und/oder C enthaltende Wasserphase neutralisiert. In letzteren Verfahren fällt das Emulgatorharz A zusammen mit den Emulgatoren B und C als wäßrige Lösung bzw. Dispersion, als sogenanntes Emulgatorkonzentrat, an.

Als Komponente B verwendet man alkoxylierte aliphatisch-substituierte Aromaten, die der allgemeinen Formel

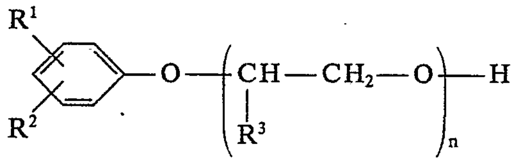

entsprechen, wobei

$R^1$ einen $C_1$—$C_{16}$-Alkylrest, vorzugsweise einen $C_6$—$C_{16}$-Alkylrest,
$R^2$ H, $C_1$—$C_{16}$-Alkylrest, vorzugsweise H,
$R^3$ H oder Methyl,
n eine Zahl von 10—50, vorzugsweise 15—30 bedeuten.

Die Zahl n stellt stets einen Mittelwert dar.

Geeignete derartige nichtionische Emulgatoren haben einen HLB-Wert $\geq$15. Das HLB-Konzept ist erläutert in Ullmanns Enzyclopädie der Technischen Chemie, 4. Aufl. Bd. 10, S. 462—3, Verlag Chemie Weinheim, 1975.

Diese Emulgatoren werden hergestellt nach bekannten Verfahren durch Umsetzung von Alkylphenolen mit Alkylenoxid im gewünschten Molverhältnis.

Gut geeignete Alkylenoxide sind Ethylenoxid und Propylenoxid, wobei diese in Blockverteilung, statischer Verteilung aber auch als Homopolyether ankondensiert werden können. Wenn die Polyetherkette aus Propylenoxid und Ethylenoxid gebildet wird, so ist eine Blockverteilung bevorzugt, bei der die Polypropylenoxidkette an den Aromaten und die Polyethylenoxidkette an die Polypropylenoxidkette gebunden ist.

Als Komponente C verwendet man araliphatisch substituierte Aromaten der allgemeinen Struktur

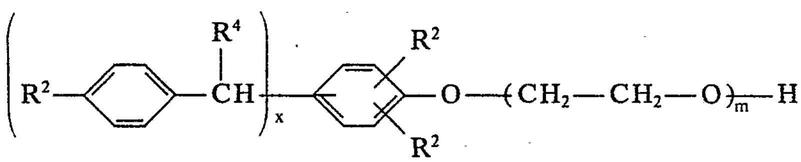

wobei

$R^2$ jeweils die obengenannte Bedeutung hat,
$R^4$ $C_1$—$C_4$-Alkyl bedeutet,
x eine Zahl zwischen 2,0 und 3,0 und
m eine Zahl von 15—100, vorzugsweise von 25—70, ist.

Die Zahlen x und m werden dabei stets als Mittelwert betrachtet.

Derartige Substanzen erhält man, indem man zunächst Anlagerungsprodukte aus Styrol und/oder seinen Derivaten an Phenol und/oder seine Derivate als hydrophobe Molekülteile herstellt und die Umsetzungsprodukte anschließend oxethyliert. Man kann dabei von reinen Produkten sowie Produktgemischen ausgehen. Die Herstellung dieser Produkte kann gemäß DE-AS 1 121 814 und der DE-OS 2 732 732 erfolgen.

Besonders bevorzugt werden dabei Produkte aus Styrol, Phenol und Ethylenoxid, die der Formel

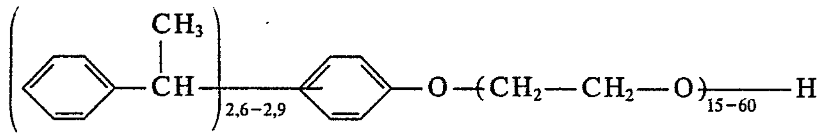

entsprechen.

Die erfindungsgemäße Dispersion wird durch Vermischen der Emulgatoren A, B, C, des Wassers und des Epoxidharzes bei 10—95°C hergestellt. Dabei kann grundsätzlich jede beliebige Reihenfolge der Zugabe dieser Komponenten benutzt werden.

Es wird bevorzugt, das oder die Epoxidharze in flüssiger Form, z. B. als Schmelze vorzulegen und das vollständige oder aufgeteilte Emulgiersystem in einer oder mehreren Portionen mit dem Harz zu verrühren. Anschließend wird die Wasserphase, welche gegebenenfalls noch Neutralisationsmittel für das Emulgatorharz A enthalten kann, zunächst in kleinen, anschließend in größeren Portionen in die Harzphase eingerührt. Es ist ebenfalls möglich, einen oder mehrere Emulgatoren A, B oder C in der Wasserphase verteilt zuzugeben. Nach Vereinigung aller Komponenten wird die Dispersion verrührt.

Zur Herstellung der erfindungsgemäßen Dispersionen sind übliche, mit langsam laufenden Rührwerken ausgestattete Reaktoren ausreichend. Hohe Scherkräfte werden zur Dispergierung im allgemeinen nicht benötigt.

Die Mengen, die zur Herstellung der erfindungsgemäßen Dispersionen aufzuwendenden Bestandteile sind:

40—55 Gew.-% eines oder mehrerer Epoxidharze und
8—18 Gew.-% Emulgiersystem,

wobei die Prozentangaben auf die gesamte Dispersion bezogen sind.

Aus diesen Angaben resultieren Dispersionen mit Festgehalten von 73—48 Gew.-%. Selbstverständlich können die Dispersionen durch Zugabe von Wasser weiter verdünnt werden.

Die erfindungsgemäßen Dispersionen können bei der Herstellung oder nachher mit anderen Polymeren, z. B. Polyaminen, Polyketiminen, Polyacrylaten, Polyurethanen, Harzharzen, z. B. Kolophonium, Xylol-Formaldehyd-Kondensaten, Aminoplastharzen, Alkylharzen usw., wie sie etwa beschrieben sind bei H. Kittel, Lehrbuch der Lacke und Beschichtungen, Bd. I, Teil 1, S. 122—445, Verlag W. A. Colomb, Stuttgart + Berlin (1971), kombiniert werden. Vorzugsweise werden diese Polymeren ebenfalls in wäßriger Verteilung, z. B. in Lösung oder Dispersion eingesetzt.

Man kann den Dispersionen geringe Mengen üblicher Hilfs- und Zusatzstoffen zusetzen, z. B. Schutzkolloide, Antischaummittel, Antiabsetzmittel, Frostschutzmittel, viskositätsbeeinflussende Zusätze, Verlaufsmittel, Katalysatoren; jedoch ist hier in jedem Fall die Verträglichkeit zu prüfen. Im allgemeinen beträgt der Zusatz üblicher Hilfs- und Zusatzstoffe jeweils 0,05—10 Gew.-%, bezogen auf Dispersion.

Die erfindungsgemäßen Systeme eignen sich zur Herstellung von Flächen- und Formkörpern, wobei sie zur Herstellung flächiger Gebilde, z. B. Überzüge besonders geeignet sind. Für Überzüge auf zahlreichen Untergründen können die erfindungsgemäßen Epoxiddispersionen anstelle konventioneller, aus Lösungsmittel applizierter Epoxidharze eingesetzt werden.

Beispiele für solche Einsatzgebiete sind: Grundierungen von Metallen, Decklacke auf Metalloberflächen, Verfestigung und Beschichtung von Bauwerkstoff-Oberflächen, z. B. Beton, Beschlichtung von Glasfasern, Verklebungen von Kunststoff- und Holzwerkteilen, Lackierung von Drähten, Herstellung von Trägerplatten für elektronische und elektrotechnische Bauteile.

Die erfindungsgemäßen Dispersionen bieten gegenüber den bisher bekannten Systemen die Vorteile leichter Herstellbarkeit, guter Handhabbarkeit, Lösungsmittelfreiheit, hoher Lagerstabilität, guter Verarbeitbarkeit und breiter Kombinierbarkeit mit wäßrigen Polymersystemen.

Die erfindungsgemäßen Dispersionen sind besonders gut geeignet für die Beschichtungen von Bauwerkstoffen. Darüber hinaus sind sie ausgezeichnete Modifikatoren für andere wäßrige Beschichtungssysteme, da sich mit ihnen spezielle Eigenschaften der Überzüge erzeugen lassen. Beispielsweise ergeben sie zusammen mit Alkydharzdispersionen Überzüge erhöhter Chemikalienbeständigkeit und verbesserter Haftung.

Die in den Beispielen angegebenen Prozentangaben und Teile beziehen sich auf das Gewicht, sofern nicht anders vermerkt.

## Beispiele

### Emulgatorharz A

In einer 2-l-Rührbecher-Apparatur, die mit Innenthermometer, Rührer, Tropftrichter und Gaseinleitungsrohr versehen ist, werden 400 g eines auf n-Butanol gestarteten Polyethylenoxidalkohols des

Molekulargewichts 2000 30 Minuten bei 120°C unter Anlegen eines Vakuums (15 Torr) entwässert. In die auf 100°C abgekühlte Schmelze werden zunächst 2 ml Benzoylchlorid eingerührt; danach fügt man 33,6 g Hexamethylendiisocyanat in einem Guß zu.

Nach 60 Minuten Reaktionszeit wird der Isocyanat-Gehalt der Mischung bestimmt. Die NCO-Zahl der Mischung beträgt danach 1,8 bis 1,9% NCO (ber.: 1,94%).

Nach Abkühlen der Schmelze erhält man die für weitere Umsetzungen geeignete hydrophile Isocyanatkomponente als wachsartig kristalline Substanz.

134 g Trimethylolpropan und 130,7 g Tetrahydrophalsäureanhydrid werden bei 220°C unter Stickstoffatmosphäre bis zur Säurezahl 4 verestert. Die Viskosität der erhaltenen Vorstufe entsprach einer Auslaufzeit (gemessen als 60%ige Lösung in Dimethylformamid nach DIN 53 211, DIN-Becher 4) von 170 Sekunden.

500 g dieser Vorstufe werden im Vakuum entwässert und anschließend mit 88,2 g der hydrophilen Isocyanatkomponente bei 100 bis 105°C miteinander umgesetzt, bis keine freien Isocyanatgruppen mehr nachweisbar sind.

580 g dieses Produktes werden mit 39 g Tetrahydrophthalsäureanhydrid bei 120°C zu einem Polyhalbester mit einer Säurezahl von ca. 27 umgesetzt.

Zu 610 g dieser Stufe gibt man unter Rühren bei 95 bis 100°C vorsichtig 26,1 g Dimethylethanolamin.

Das Harz erstarrt beim Abkühlen zu einer zähelastischen, schmelzbaren Masse.

Emulgator B und Emulgatorharz A werden im Gewichtsverhältnis 3 : 4 miteinander kombiniert und zu einer ca. 45%igen wäßrigen leicht opakten Lösung guter Fließfähigkeit und Handhabbarkeit verdünnt. Diese Lösung wird im folgenden als Emulgatorkonzentrat A/B bezeichnet.

Emulgator B

Auf Nonylphenol gepfropftes Ethylenoxid (Molverhältnis 1 : 20) mit folgenden Eigenschaften:

| | |
|---|---|
| Trübungspunkt (1%ig in Wasser): | ca. 100°C |
| Oberflächenspannung (0,1 g/l Wasser): | 44,0 dyn/cm |
| Netzwirkung (DIN 53 901): | ca. 60 sec bei 60°C |
| Fp.: | ca. 30°C |
| HLB-Wert: | 16 |

Emulgator C

Unter saurer Katalyse werden analog Beispiel 3 der DE-AS 1 121 814 2,8 Mol Styran an 1 Mol Phenol ankondensiert und das erhaltene Produkt anschließend mit 54 Mol Ethylenoxid gepfropft. Das resultierende Produkt hat die idealisierte Struktur

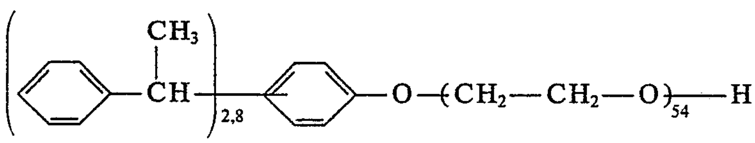

Trübungspunkt (1%ig in 1%iger Phenollösung in Wasser): 50–56°C, HLB-Wert: 17,2

Emulgator D

55 Tle. Nonylphenol (0,25 Mol), 1 Tl. 50%ige Natronlauge werden bei 100–110°C im Vakuum bei 15 Torr vom Wasser befreit. Bei 140–150°C werden 217,5 Tle. Propylenoxid (3,75 Mol) eingeleitet. Anschließend werden bei 140–150°C 363 Tle. (8,25 Mol) Ethylenoxid angelagert. Man erhält ein Blockkondensationsprodukt aus 1 Mol Nonylphenol, 15 Mol Propylenoxid und 22 Mol Ethylenoxid.

Beispiel 1

416,7 Tle. eines niedermolekularen Epoxidharzes auf Basis Bisphenol A, Epoxidäquivalentgewicht 190 wird mit 89,5 Tln. Emulgatorkonzentrat A/B und 83 Tln. Emulgator C bei 45°C unter $N_2$ homogen verrührt. Man gibt in 20 Min. bei 45–34°C 410,5 Tle. $H_2O$ unter Rühren zu und erhält eine homogene,

über Wochen stabile Dispersion mit ca. 54% Festkörper.

Beispiel 2

416,7 Tle. eines festen Epoxidharzes auf Basis Bisphenol A, Epoxidäquivalentgewicht 650, 89,5 Tle. Emulgatorkonzentrat A/B, 83,3 Tle. Emulgator C werden unter $N_2$ in 1 h auf 75°C erwärmt und vermischt und unter Rühren bei 75–55°C 410,5 Tle. $H_2O$ zugegeben. Man erhält eine homogene, über Wochen stabile Dispersion mit ca. 53% Festkörper.

Beispiel 3

416,7 Tle. Glycidylester einer $\alpha$-verzweigten $C_{10}$-Fettsäure wird mit 89,5 Tln. Emulgatorkonzentrat und 83,3 Tln. Emulgator C bei 45°C unter $N_2$ verrührt und anschließend bei 45–40°C 410,5 Tle. $H_2O$ zugetropft. Man rührt 30 Min. bei 40–45°C nach und erhält eine stabile Dispersion mit ca. 53% Festgehalt.

Beispiel 4

416,7 g eines festen Epoxidharzes auf Basis Bisphenol A, Epoxidäquivalentgewicht 475, wurde unter $N_2$ bei 80°C mit 89,5 Tln. Emulgatorkonzentrat A/B und 83,3 Tln. Emulgator C verrührt. Anschließend wurde n 20 min 410,5 Tle. $H_2O$ zugetropft, 20 min bei 60–50°C gerührt und auf Raumtemperatur abgekühlt. Man erhält eine ca. 54%ige stabile Dispersion.

Beispiel 5

2000 Tle. eines flüssigen Epoxidharzes auf Basis Bisphenol A, Epoxidäquivalentgewicht 185, 400 Tle. Emulgatorkonzentrat A/B, 400 Tle. Emulgator C werden bei 40–47°C unter $N_2$ homogenisiert. Anschließend gibt man 200 Tle. $H_2O$ bei 45–38°C zu und setzt das Durchmischen bis zum Abkühlen auf Raumtemperatur fort. Die erhaltene homogene Dispersion hat ca. 54% Festgehalt. Der Epoxidgehalt der Dispersion ändert sich auch bei 5monatiger Lagerung nicht.

Vergleichsversuch a

100 Tle. eines flüssigen Epoxidharzes auf Basis Bisphenol A, Epoxidäquivalent 185, wurden mit 8 Tln. Emulgator D bei 45°C unter $N_2$ verrührt und anschließend 100 Tle. $H_2O$ zugetropft. Die Dispersion war instabil und setzte sich innerhalb einiger Stunden ab.

Vergleichsversuch b

Dieser Versuch entspricht dem Vergleichsversuch a, nur wurden die Emulgatormenge stark heraufgesetzt.

100 Tle. eines flüssigen Epoxidharzes auf Basis Bisphenol A, Epoxidäquivalent 185 und 29,2 Tle. Emulgator D wurden unter $N_2$ bei 45°C verrührt und anschließend 100 Tle. $H_2O$ zugetropft. Die Dispersion trennte nach einem einem Tag Lagerung auf.

Die Vergleichsversuche a und b zeigen, daß Epoxidharzdispersionen mit Emulgatoren gemäß DE-OS 2 213 051 bei Weglassen des Härtezusatzes instabil sind.

Vergleichsversuch c

Aus 200 Tln. eines flüssigen Epoxidharzes auf Basis Bisphenol A, Epoxidäquivalent 185, 7,9 Tln. Emulgator B, 40 Tln. Emulgator C, 10,5 Tln. Emulgatorharz A in nicht neutralisierter Form sowie 200 Tln. $H_2O$ wurde entsprechend Beispiel 5 eine Dispersion hergestellt. Bei Lagerung trennt die Dispersion bereits innerhalb einer Woche auf.

Analoge Ergebnisse werden erhalten, wenn jeweils 58,4 Tle. des Emulgators B bzw. des Emulgators C, bzw. des Emulgatorharzes A allein eingesetzt werden.

## Beispiel 6

50 Tle. der Dispersion aus Beispiel 5, 8,3 Tle. 3,3'-Dimethyl-4,4'-diamino-dicyclohexylmethan und 4,0 Tle. Benzylalkohol/Salicylsäure 7 : 1 wurden zu einem Lack angerührt. Ein mit 120 µm Naßfilmstärke auf eine Glasplatte aufgezogener Film wurde über Nacht bei Raumtemperatur getrocknet und anschließend 24 h bei 50°C ausgehärtet. Er hatte eine Pendelhärte von 153 sec (DIN 53 157).

## Beispiel 7

Das Beispiel 6 wurde wiederholt, jedoch mit Zusatz von 25 Tln. einer Farbpaste bestehend aus

80 Tln. Titandioxid-Pigment
50 Tln. Talkum
100 Tln. $H_2O$
2 Tln. Polyacrylsäure, $NH_4^{\oplus}$-Salz, 3%ig in $H_2O$.

Man erhielt einen Film mit 187 sec Pendelhärte (DIN 53 157).
Die Materialien der Beispiele 6 und 7 eignen sich vorzüglich zur Versiegelung von Betonoberflächen. Sie bilden bei Aushärtung bei Raumtemperatur harte, kratzfeste, zähelastische Überzüge mit guter Chemikalienbeständigkeit.

## Beispiel 8

Das Beispiel zeigt die Verwendung der erfindungsgemäßen Dispersion bei der Formulierung von Glasfaserschlichten. Nach den bekannten Methoden (s. a. K. L. Loewenstein: The Manufacturing Technolgy of Continous Glas Fibers, Verlag Elsevier Scientific Publishing Comp., Amsterdam, London, N. Y. (1973)) wurden Glasfaserschlichten der folgenden Rezeptur hergestellt. Die Mengenangaben beziehen sich jeweils auf die Festsubstanzen:

2,5 Gew.-% Polyesterurethandispersion gemäß DE-OS 2 551 094
2,5 Gew.-% Dispersion aus Beispiel 2
0,5 Gew.-% γ-Aminopropyltriethoxysilan
0,5 Gew.-% Block-Copolymerisat aus Ethylenoxid und Propylenoxid.

Nach bekannten Methoden gewonnene Glasfasern wurden durch Walzenauftrag mit dieser Schlichte versehen und getrocknet. Die Fasern sind einwandfrei verarbeitbar, gut zu choppen. Die chopped strands zeigen wenig Filamentisierung, gute Gebundenheit, haben ein niedriges Schüttvolumen sowie gute Dosierbarkeit. Sie weisen gutes Verstärkungsverhalten in üblichen Thermoplasten und in Zementprodukten auf.

**Patentanspruch**

Wäßrige Dispersionen von Epoxidverbindungen bestehend aus Wasser, 40—55 Gew.-% einer oder mehreren wasserunlöslichen 1,2-Epoxidverbindungen mit Molgewichten $\overline{M}n$ zwischen 150 und 3000 und 8—18 Gew.-% Emulgiersystem, dadurch gekennzeichnet, daß das Emulgiersystem besteht aus

A) 9,5—35 Gew.-% mindestens eines Carboxylgruppen enthaltenden Polyesterharzes mit Säurezahlen von 10—50 mg KOH/g Substanz und Molgewichten $\overline{M}n$ von 400—4000, mindestens 30% der Carboxylgruppen sind neutralisiert,
B) 0,5—25 Gew.-% mindestens eines Emulgators mit einem HLB-Wert ≥15 und der Struktur

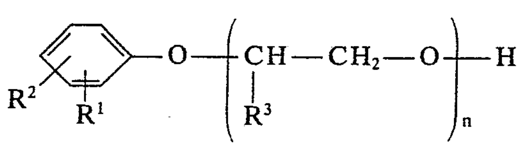

worin

$R^1$ einen $C_1$—$C_{16}$-Alkylrest,
$R^2$ H oder einen $C_1$—$C_{16}$-Alkylrest,
$R^3$ H oder Methyl,
n eine Zahl von 10—50 bedeuten;

C) 40–90 Gew.-% mindestens eines Emulgators mit einem HLB-Wert ≥15 und der allgemeinen Struktur

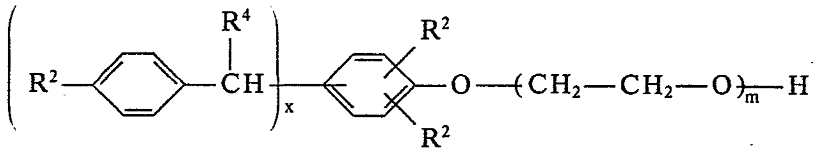

wobei

$R^2$ jeweils die obengenannte Bedeutung hat,
$R^4$ $C_1$–$C_4$-Alkyl bedeutet,
x eine Zahl zwischen 2,0 und 3,0 und
m eine Zahl von 15–100, ist, die Summe der Prozentgehalte aus A, B und C ist 100%.

**Claims**

Aqueous dispersions of epoxide compounds, consisting of water, 40–55% by weight of one or more water-insoluble 1,2-epoxide compounds having molecular weights $\overline{M}n$ of between 150 and 3000 and 8–18% by weight of an emulsifying system, characterised in that the emulsifying system consists of

A) 9,5–35% by weight of at least one polyester resin containing carboxyl groups and having acid numbers of 10–50 mg KOH/g substance and molecular weights $\overline{M}n$ of 400–4000, at least 30% of the carboxyl groups are neutralised,
B) 0,5–25% by weight of at least one emulsifier having an HLB-value ≥15 and the formula

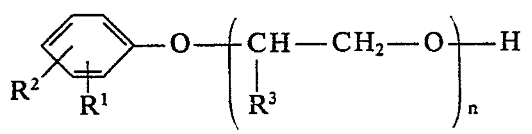

wherein

$R^1$ denotes a $C_1$–$C_{16}$-alkyl radical,
$R^2$ denotes H or a $C_1$–$C_{16}$-alkyl radical,
$R^3$ denotes H or methyl, and
n represents a number from 10 to 50;

C) 40–90% by weight of at least one emulsifier having an HLB-value ≥15 and the general formula

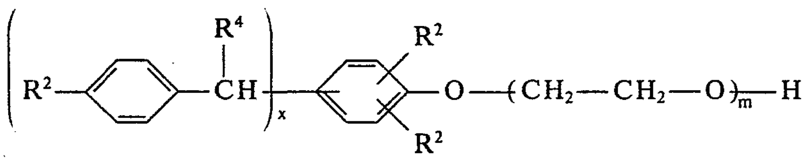

wherein

$R^2$ in each case has the meaning indicated above,
$R^4$ denotes $C_1$–$C_4$-alkyl,
x is a number between 2,0 and 3,0 and
m is a number form 15 to 100, the sum of the percentage contents from A, B and C is 100%.

**Revendication**

Dispersions aqueuses de composés époxy consistant en de l'eau, en 40–55% en poids d'un ou plusieurs composés 1,2-époxy insolubles dans l'eau ayant des poids moléculaires $\overline{M}n$ entre 150 et 3000 et en 8–18% en poids d'un système émulsifiant, caractérisées en ce que le système émulsifiant consiste en

A) 9,5–35% en poids d'une résine polyester contenant au moins un groupe carboxyle ayant des indices d'acide de 10–50 mg KOH/g de substance et des poids moléculaires $\overline{M}n$ de 400–4000, au

moins 30% des groupes carboxyle étant neutralisés,

B) 0,5–25% en poids d'au moin un émulsifiant ayant une valeur HLB égale ou supérieure à 15 et de structure:

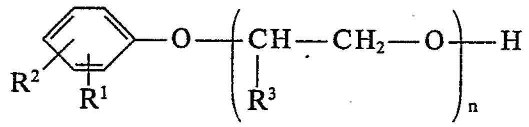

dans laquelle

$R^1$ radical alcoyle en $C_1$–$C_{16}$,
$R^2$ H ou radical alcoyle en $C_1$–$C_{16}$,
$R^3$ H ou méthyle,
n nombre de 10 à 50;

C) 40–90% en poids d'au moins un émulsifiant ayant une valeur HLB égale ou supérieure à 15 et ayant la structure générale:

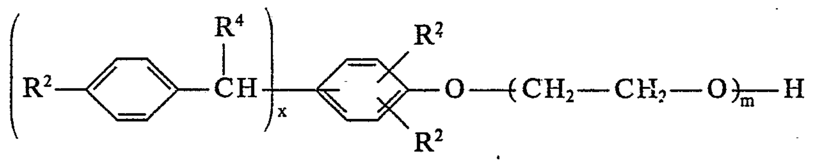

dans laquelle

$R^2$ a chaque fois la signification indiquée plus haut,
$R^4$ signifie un alcoyle en $C_1$–$C_4$,
x un nombre entre 2,0 et 3,0 et
m un nombre de 15–100, la somme des pourcentages de A, B et C étant de 100%.